# EUROPEAN PATENT APPLICATION

(11) **EP 4 786 890 A1**
(43) Date of publication of application: **05.08.2026**
(21) Application number: 25859480.3
(22) Date of filing: 01.09.2025
(51) Int. Cl.: F25B 39/02, F28F 9/007, F24F 13/30

(54) **EVAPORATOR BRACKET AND INDOOR AIR-CONDITIONING UNIT**

(30) Priority: 02.09.2024 CN 202411224007
(71) Applicant: Xiaomi Technology (Wuhan) Co., Ltd., Wuhan, Hubei 430000 (CN); Xiaomi Smart Appliances (Wuhan) Co., Ltd., Wuhan, Hubei 430073 (CN); Beijing Xiaomi Mobile Software Co., Ltd., Beijing 100085 (CN)
(72) Inventor: MU, Yuan, Wuhan, Hubei 430000 (CN); ZHENG, Liming, Wuhan, Hubei 430000 (CN); XIONG, Benwen, Wuhan, Hubei 430000 (CN); ZHANG, Huazhong, Wuhan, Hubei 430000 (CN); WU, Junhong, Wuhan, Hubei 430000 (CN)
(74) Representative: Dehns Germany Partnerschaft mbB
(86) International application number: PCT/CN2025/118331
(87) International publication number: WO 2026/046407

(57) **Abstract**

The present disclosure relates to an evaporator bracket and an indoor air-conditioning unit. The evaporator bracket comprises a bracket body, a fixing portion, a water guide portion, and a wiring portion. The fixing portion is arranged on the bracket body and is configured to allow a metal tube of an evaporator to pass through; both the water guide portion and the fixing portion are arranged on the side of the bracket body facing away from the evaporator; the water guide portion extends toward the lower end of the bracket body; the wiring portion is arranged on the bracket body, and the wiring portion is configured to fix a wire harness.

## Description

### CROSS-REFERENCE TO RELATED APPLICATION

This application is based on and claims priority to Chinese Patent Application Serial No. 2024112240071, filed on September 2, 2024, the entire content of which are incorporated herein by reference.

### FIELD

The present disclosure relates to a field of air conditioning technologies, and more particularly to an evaporator bracket and an air conditioner indoor unit.

### BACKGROUND

With the continuous improvement of people's living standards, air conditioners are becoming more and more popular in people's daily life, and people's requirements for air conditioners are getting higher and higher. An indoor unit of the air conditioners has an evaporator for heat exchange, and an end of the evaporator has an evaporator bracket. In the related art, the evaporator bracket may only fix components such as the evaporator, and its structure and function are single, and the degree of integration is low.

### SUMMARY

The present disclosure seek to solve at least one of the problems existing in the related art to at least some extent.

Therefore, embodiments of the present disclosure provide an evaporator bracket, which may fix an evaporator, have the functions of water guiding and wiring, and have a high degree of integration.

Embodiments of the present disclosure also provide an air conditioner indoor unit.

The evaporator bracket of embodiments of the present disclosure includes a bracket body, a fixing portion, a water guiding portion and a wiring portion. The fixing portion is arranged on the bracket body configured to be passed through by a metal tube of an evaporator. The water guiding portion and the fixing portion are arranged on a side of the bracket body facing away from the evaporator. The water guiding portion extends toward a lower end of the bracket body, and the wiring portion is arranged on the bracket body and is configured for fixing a wiring harness.

According to the evaporator bracket of embodiments of the present disclosure, since the fixing portion is configured to be passed through by the metal tube of the evaporator, and the water guiding portion and the fixing portion are arranged on the side of the bracket body facing away from the evaporator, the condensed water accumulated at the position of the fixing portion may be gradually guided toward the lower end of the bracket body through the water guiding portion, to avoid the problem of water leakage of the air conditioner indoor unit caused by disorderly dripping of the condensed water. On the other hand, since the wiring portion is arranged on the bracket body, and the wiring portion is configured for fixing the wiring harness, the problem that the wiring harness shakes relative to the evaporator bracket may be avoided, and it is beneficial to reduce electrical safety hazards. Therefore, the evaporator bracket of embodiments of the present disclosure may fix the evaporator, have the functions of water guiding and wiring, and have the high degree of integration.

In some embodiments, the water guiding portion includes a water baffle plate, the water baffle plate projects toward a side of the bracket body facing away from the evaporator, the water baffle plate is arranged on an outer edge of the bracket body and gradually extends toward a lower end of the bracket body, and a size of the water baffle plate protruding from the bracket body is larger than a size of the fixing portion protruding from the bracket body.

In some embodiments, the fixing portion includes a first fixing portion and a second fixing portion, the first fixing portion and the second fixing portion are arranged to form a V-shaped structure, an apex of the V-shape structure is oriented downward, the first fixing portion is arranged on a front side of the second fixing portion, the water baffle plate includes a first water baffle plate, and the first water baffle plate is arranged on a front side of the first fixing portion and extends along a length direction of the first fixing portion.

In some embodiments, the water baffle plate further includes a second water baffle plate, the second water baffle plate is arranged on a rear side of the second fixing portion and extends along a length direction of the second fixing portion.

In some embodiments, at least one of the first fixing portion and the second fixing portion includes a water retaining edge and a plurality of fixing sleeves, the plurality of fixing sleeves are sequentially arranged from top to bottom, the metal tubes pass through the plurality of fixing sleeves in a one-to-one correspondence, the water retaining edge projects toward a side of the bracket body facing away from the evaporator, and the water retaining edge is sequentially connected to the plurality of fixing sleeves from top to bottom.

In some embodiments, the water guiding portion includes a water guiding rib, the water guiding rib projects toward a side of the bracket body facing away from the evaporator, and the water guiding rib is inclined in a front-rear direction of the bracket body and extends downward.

In some embodiments, the water guiding rib includes a plurality of bent segments, an angle is present between two adjacent bent segments, and the plurality of bent segments are sequentially connected from top to bottom.

In some embodiments, the evaporator bracket further includes a first protruding edge and a second protruding edge, the first protruding edge and the second protruding edge are arranged on a side of the bracket body facing the evaporator, the first protruding edge is annular and configured for mating with an air impeller, the second protruding edge is arranged adjacent to an upper end of the bracket body and configured for mating with an air guiding frame, and the first protruding edge and the second protruding edge are spaced apart to form a drainage notch.

In some embodiments, the evaporator bracket further includes a mounting portion, the mounting portion is configured for mounting a heater, the wiring portion includes a wiring trough, the wiring trough and the mounting portion are arranged on a side of the bracket body adjacent to the evaporator, and at least a portion of a heating wire of the heater is arranged in the wiring trough.

In some embodiments, the wiring portion further includes a snap-on clip, the snap-on clip is arranged at an opening position of the wiring trough, and the snap-on clip and the wiring trough together define a snap channel for fixing the heating wire.

In some embodiments, the wiring portion further includes a wiring exit hole, the wiring exit hole is arranged at an end of the wiring trough facing away from the mounting portion, and the wiring exit hole penetrates the bracket body in a thickness direction of the evaporator bracket.

In some embodiments, an upper end of the wiring exit hole has a notch, the notch is in communication with the wiring exit hole, and the notch is gradually flared from bottom to top; and/or the wiring portion further includes a wiring clip, the wiring clip is arranged on the side of the bracket body facing away from the evaporator, a wiring hole is formed in the wiring clip, and the wiring hole is configured to be passed through by the heating wire.

In some embodiments, the fixing portion includes a plurality of fixing sleeves spaced apart from each other, each fixing sleeve projects toward a side of the bracket body facing away from the evaporator, each fixing sleeve is configured for fixing the metal tube of the evaporator, the side of the evaporator bracket facing away from the evaporator is provided with a plurality of support portions spaced apart from each other, ends of the plurality of support portions are located in a same plane, the plurality of support portions include a first support portion, and at least one of the plurality of fixing sleeves forms the first support portion.

In some embodiments, the plurality of support portions include a second support portion, the evaporator bracket further includes a bearing seat, the bearing seat is configured for supporting an end of the air impeller, and the bearing seat projects toward the side of the bracket body facing away from the evaporator to form the second support portion.

In some embodiments, the plurality of support portions include a third support portion, the water guiding portion includes a water baffle plate, the water baffle plate projects toward a side of the bracket body facing away from the evaporator, the water baffle plate is arranged on an outer edge of the bracket body and gradually extends toward a lower end of the bracket body, and at least a portion of the water baffle plate forms the third support portion.

In some embodiments, the plurality of support portions include a fourth support portion, the evaporator bracket further includes a boss, the boss is arranged at a top of the bracket body and arranged adjacent to a front side of the bracket body, and the boss projects toward a side of the bracket body facing away from the evaporator to form the fourth support portion.

In some embodiments, the plurality of fixing sleeves are arranged sequentially along a V-shaped preset path, an apex of the V-shaped preset path is oriented downward, and the first support portion is arranged adjacent to a lower end of the bracket body.

In some embodiments, the plurality of fixing sleeves includes one first fixing sleeve and a plurality of second fixing sleeves, a protruding size of the first fixing sleeve is larger than a protruding size of each of the plurality of second fixing sleeves, the first fixing sleeve is arranged adjacent to the lower end of the bracket body, and the first fixing sleeve forms the first support portion.

In some embodiments, a lower end of the first fixing sleeve has an avoidance notch, and the avoidance notch is configured to avoid a condensate pan.

An air conditioner indoor unit according to other embodiments of the present disclosure includes: an evaporator, an end of the evaporator having a metal tube; the evaporator bracket according to any one of the embodiments of the present disclosure, the evaporator bracket being arranged at the end of the evaporator, and the metal tube passing through the fixing portion; and a frame and a base, in which the frame and the base enclose a mounting cavity, the evaporator and the evaporator bracket are arranged in the mounting cavity, and the frame has an air inlet and an air outlet.

According to the air conditioner indoor unit according to other embodiments of the present disclosure, since the fixing portion is configured to be passed through by the metal tube of the evaporator, and the water guiding portion and the fixing portion are arranged on the side of the bracket body facing away from the evaporator, condensed water accumulated at the position of the fixing portion may be gradually guided toward the lower end of the bracket body through the water guiding portion, to avoid the problem of water leakage of the air conditioner indoor unit caused by disorderly dripping of the condensed water. On the other hand, since the wiring portion is arranged on the bracket body, and the wiring portion is configured for fixing the wiring harness, the problem that the wiring harness shakes relative to the evaporator bracket may be avoided, and it is beneficial to reduce electrical safety hazards. Therefore, the evaporator bracket of the air conditioner indoor unit according to embodiments of the present disclosure may fix the evaporator, have the functions of water guiding and wiring, and have the high degree of integration.

### BRIEF DESCRIPTION OF THE DRAWINGS

FIG. 1 is a partial assembly schematic view of an evaporator bracket, an evaporator, and a condensate pan according to an embodiment of the present disclosure.
FIG. 2 is a perspective view of an evaporator bracket according to an embodiment of the present disclosure.
FIG. 3 is a perspective view of an evaporator bracket according to an embodiment of the present disclosure from another angle.
FIG. 4 is a left side view of an evaporator bracket according to an embodiment of the present disclosure.
FIG. 5 is a right side view of an evaporator bracket according to an embodiment of the present disclosure.
FIG. 6 is a cross sectional view of an evaporator bracket, an evaporator, and a condensate pan after assembly according to an embodiment of the present disclosure.
FIG. 7 is a schematic diagram of an evaporator bracket and an evaporator arranged vertically according to an embodiment of the present disclosure.
FIG. 8 is a side view of an evaporator bracket according to an embodiment of the present disclosure.
FIG. 9 is a schematic diagram of an evaporator bracket, an evaporator, and a heating module according to an embodiment of the present disclosure.
FIG. 10 is a cross sectional view of an air conditioner indoor unit according to an embodiment of the present disclosure.

### Reference numerals:

1, evaporator; 11, metal tube;
2, evaporator bracket; 21, bracket body; 22, fixing portion; 221, first fixing portion; 222, second fixing portion; 223, water retaining edge; 224, fixing sleeve; 2241, first fixing sleeve; 22411, avoidance notch; 2242, second fixing sleeve; 23, water guiding portion; 231, water baffle plate; 2311, first water baffle plate; 23111, first rib segment; 23112, second rib segment; 2312, second water baffle plate; 232, water guiding rib; 2321, bent segment; 241, first protruding edge; 242, second protruding edge; 243, drainage notch; 25, wiring portion; 251, wiring trough; 252, wiring exit hole; 2521, notch; 253, wiring clip; 2531, wiring hole; 261, mounting portion; 2611, receptacle; 262, boss; 263, bearing seat; 271, first support portion; 272, second support portion; 273, third support portion; 274, fourth support portion;
3, heating module; 31, heater; 32, heating wire; 33, curved segment;
4, base;
5, frame; 51, air inlet; 52, air outlet;
6, air guiding frame;
7, condensate pan;
8, air impeller.

### DETAILED DESCRIPTION OF THE DISCLOSURE

Embodiments of the present disclosure are described in detail below, and examples of the embodiments are shown in accompanying drawings. The embodiments described herein with reference to drawings are explanatory, illustrative, and used to generally understand the present disclosure. The embodiments shall not be construed to limit the present disclosure.

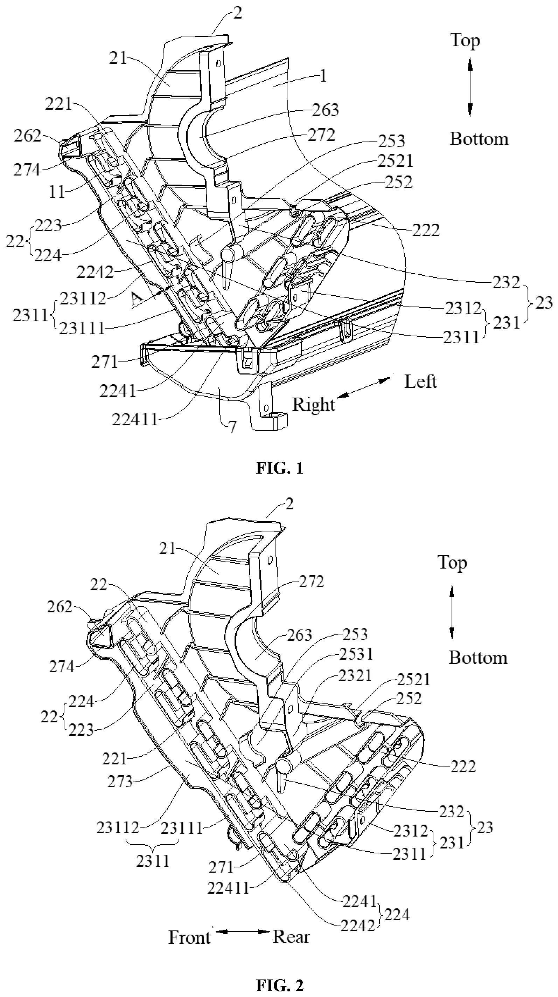

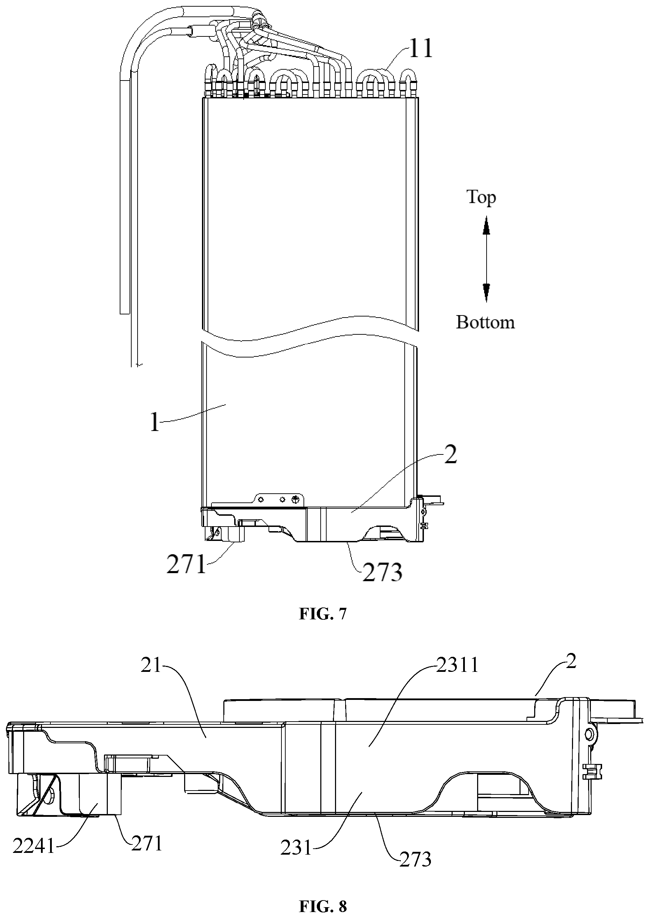

An evaporator bracket, an air conditioner indoor unit, and an air conditioner according to embodiments of the present disclosure are described below with reference to FIGS. 1 to 10.

As illustrated in FIGS. 1 to 6, an evaporator bracket 2 of embodiments of the present disclosure includes a bracket body 21, a fixing portion 22, a water guiding portion 23, and a wiring portion 25. The fixing portion 22 is arranged on the bracket body 21 and is configured to be passed through by a metal tube 11 of an evaporator 1, the water guiding portion 23 and the fixing portion 22 are arranged on a side of the bracket body 21 facing away from the evaporator 1, the water guiding portion 23 extends toward a lower end of the bracket body 21, and the wiring portion 25 is arranged on the bracket body 21 and is configured for fixing a wiring harness.

According to the evaporator bracket 2 of embodiments of the present disclosure, since the fixing portion 22 is configured to be passed through by the metal tube 11 of the evaporator 1, and the water guiding portion 23 and the fixing portion 22 are arranged on the side of the bracket body 21 facing away from the evaporator 1, the condensed water accumulated at the position of the fixing portion 22 may be gradually guided toward the lower end of the bracket body 21 through the water guiding portion 23 to avoid the problem of water leakage in the air conditioner indoor unit caused by disorderly dripping of the condensed water. On the other hand, since the wiring portion 25 is arranged on the bracket body 21, and the wiring portion 25 is configured for fixing the wire harness, the problem that the wire harness shakes relative to the evaporator bracket 2 may be avoided, and it is beneficial to reduce electrical safety hazards. Therefore, the evaporator bracket 2 of embodiments of the present disclosure may fix the evaporator 1, have the functions of water guiding and wiring, and have the high degree of integration.

In some embodiments, as illustrated in FIGS. 1 to 5, the water guiding portion 23 includes a water baffle plate 231, the water baffle plate 231 projects toward a side of the bracket body 21 facing away from the evaporator 1, the water baffle plate 231 is arranged on an outer edge of the bracket body 21 and gradually extends toward a lower end of the bracket body 21. It may be understood that when the evaporator 1 is in operation, the condensed water is accumulated at the position where the fixing portion 22 is passed through by the metal tube 11, and since the water baffle plate 231 is arranged at the outer edge of the bracket body 21, the condensed water accumulated at the end of the fixing portion 22 and the metal tube 11 may drip onto the water baffle plate 231. The condensate pan 7 is usually arranged below the evaporator bracket 2, and the water baffle plate 231 may guide the condensed water downward to the condensate pan 7, avoiding the problem of water leakage in the air conditioner indoor unit caused by the condensed water directly dripping downward.

Therefore, the evaporator bracket 2 of the embodiments of the present disclosure may guide the condensed water generated by the operation of the evaporator 1 through the water baffle plate 231 to avoid the problem of water leakage in the air conditioner indoor unit, which is beneficial to improving the user experience.

In an example of the present disclosure, a size of the water baffle plate 231 protruding from the bracket body 21 is larger than a size of the fixing portion 22 protruding from the bracket body 21. It may be understood that an extension length of the water baffle plate 231 is longer than an extension length of the fixing portion 22, so that even when the condensed water at the end of the fixing portion 22 drips downward, it may be caught by the water baffle plate 231, and the water baffle and flow guiding effects of the evaporator bracket 2 are further improved.

As illustrated in FIG. 1, the end of the metal tube 11 is located in the fixing portion 22. In other words, the end of the metal tube 11 does not extend beyond the end of the fixing portion 22. On the one hand, the metal tube 11 may be avoided from being bumped during assembly, and on the other hand, the condensed water generated on the metal tube 11 may also be completely dripped onto the bracket body 21 and the water baffle plate 231, to improve the flow guiding effect of the condensed water.

Specifically, as illustrated in FIGS. 1 to 5, the fixing portion 22 includes a first fixing portion 221 and a second fixing portion 222, the first fixing portion 221 and the second fixing portion 222 are arranged to form a V-shaped structure, an apex of the V-shape structure is oriented downward, the first fixing portion 221 is arranged on a front side of the second fixing portion 222, the water baffle plate 231 includes a first water baffle plate 2311, and the first water baffle plate 2311 is arranged on a front side of the first fixing portion 221 and extends along a length direction of the first fixing portion 221. It should be noted that a front-rear direction of the evaporator bracket 2 coincides with a front-rear direction of the air conditioner indoor unit. The front side of the first fixing portion 221 is the front side of the evaporator bracket 2.

Since the first fixing portion 221 and the second fixing portion 222 form a V-shaped structure with an apex oriented downward, the length direction of the first fixing portion 221 is gradually inclined downward from front to rear, and the first water baffle plate 2311 is also gradually inclined downward from front to rear. Since the first water baffle plate 2311 is arranged on the front side of the first fixing portion 221, the first water baffle plate 2311 may guide the condensed water dripping from the first fixing portion 221.

In an example of the present disclosure, the size of the first water baffle plate 2311 protruding from the bracket body 21 is larger than the size of the first fixing portion 221 protruding from the bracket body 21. Accordingly, even when the condensed water at the end of the first fixing portion 221 drips downward, the condensed water may be caught by the first water baffle plate 2311, and the water baffle and flow guiding effects of the evaporator bracket 2 are further improved.

In some embodiments, as illustrated in FIGS. 1 to 5, the water baffle plate 231 further includes a second water baffle plate 2312, the second water baffle plate 2312 is arranged on a rear side of the second fixing portion 222 and extends along a length direction of the second fixing portion 222. Since the first fixing portion 221 and the second fixing portion 222 enclose a V-shaped structure with an apex oriented downward, the length direction of the second fixing portion 222 is gradually inclined downward from rear to front, and the second water baffle plate 2312 is also gradually inclined downward from rear to front. In other words, the first water baffle plate 2311 and the second water baffle plate 2312 collectively enclose the V-shaped structure. Since the second water baffle plate 2312 is arranged on the rear side of the second fixing portion 222, the second water baffle plate 2312 may guide the condensed water dripping from the second fixing portion 222.

In an example of the present disclosure, the size of the second water baffle plate 2312 protruding from the bracket body 21 is larger than the size of the second fixing portion 222 protruding from the bracket body 21. As a result, even when the condensed water at the end of the second fixing portion 222 drips downward, the condensed water may be caught by the second water baffle plate 2312, and the water baffle and flow guiding effects of the evaporator bracket 2 are further improved.

Further, as illustrated in FIGS. 1 to 5, at least one of the first fixing portion 221 and the second fixing portion 222 includes a water retaining edge 223 and a plurality of fixing sleeves 224, the plurality of fixing sleeves 224 are sequentially arranged from top to bottom, the metal tubes 11 pass through the plurality of fixing sleeves 224 in a one-to-one correspondence, the water retaining edge 223 projects toward a side of the bracket body 21 facing away from the evaporator 1, and the water retaining edge 223 is sequentially connected to the plurality of fixing sleeves 224 from top to bottom. Since the water retaining edge 223 is sequentially connected with the fixing sleeves 224 from top to bottom, the water retaining edge 223 may receive a part of the condensed water dripping from the fixing sleeves 224, the bracket body 21 or the metal tubes 11, and may guide the condensed water into the condensate pan 7 below the evaporator bracket 2, further improving the water guiding effect of the evaporator bracket 2.

For example, only one of the first fixing portion 221 and the second fixing portion 222 is a connection structure between the water retaining edge 223 and the fixing sleeves 224. For another example, both the first fixing portion 221 and the second fixing portion 222 are connection structures between the water retaining edge 223 and the fixing sleeves 224.

Specifically, the first fixing portion 221 and the second fixing portion 222 each include two rows of fixing sleeves 224, and each row of fixing sleeves 224 includes a plurality of fixing sleeves 224 spaced from top to bottom. Furthermore, each row of fixing sleeves 224 is correspondingly provided with a water retaining edge 223, and the water retaining edge 223 sequentially connects the plurality of fixing sleeves 224 in series from top to bottom.

In some embodiments, as illustrated in FIGS. 1 to 5, the water guiding portion 23 includes a water guiding rib 232, the water guiding rib 232 projects toward a side of the bracket body 21 facing away from the evaporator 1, and the water guiding rib 232 is inclined in a front-rear direction of the bracket body 21 and extends downward. It may be understood that the condensed water accumulated on an outer wall surface of the bracket body 21 (a wall surface on the side facing away from the evaporator 1) may be collected downward to the position of the water guiding rib 232, and the collected condensed water may be guided to the position of the lower end of the evaporator bracket 2 under the guidance of the water guiding rib 232, so that the condensed water may fall into the condensate pan 7, greatly reducing the probability of the condensed water dropping outside the condensate pan 7, and improving the flow guiding effect of the condensed water of the evaporator bracket 2.

For example, the water guiding portion 23 may be only the water guiding rib 232. For another example, the water guiding portion may be only the water baffle plate 231.

In an example of the present disclosure, the water guiding portion 23 includes both the water guiding rib 232 and the water baffle plate 231. It may be understood that under the synergistic action of the water guiding rib 232 and the water baffle plate 231, the condensed water on the fixing portion 22 and the bracket body 21 may be collectively guided to the lower end of the evaporator bracket 2, further avoiding the problem of water leakage in the air conditioner indoor unit caused by disorderly dripping of the condensed water.

Specifically, the water guiding rib 232 is arranged between the first fixing portion 221 and the second fixing portion 222, the upper end of the water guiding rib 232 is arranged adjacent to the second fixing portion 222, and the lower end of the water guiding rib 232 extends toward the apex of the V-shape of the evaporator bracket 2.

It may be understood that the water guiding rib 232 mainly guides the condensed water on the outer wall surface of the bracket body 21, and the water baffle plate 231 (the first water baffle plate 2311 and the second water baffle plate 2312) mainly guides the condensed water generated on the fixing portion 22 (the first fixing portion 221 and the second fixing portion 222). That is, under the synergistic action of the water guiding rib 232 and the water baffle plate 231, the condensed water on the fixing portion 22 and the bracket body 21 may be collectively guided to the lower end of the evaporator bracket 2. So that the condensed water may just fall into the condensate pan 7, greatly reducing the probability of the condensed water dropping outside the condensate pan 7, and improving the flow guiding effect of the condensed water of the evaporator bracket 2.

In some embodiments, as illustrated in FIGS. 1 to 5, the water guiding rib 232 includes a plurality of bent segments 2321, an angle is present between two adjacent bent segments 2321, and the plurality of bent segments 2321 are sequentially connected from top to bottom. By designing the water guiding rib as the above-described structure, the evaporator bracket 2 of embodiments of the present disclosure may buffer the condensed water flowing into an upper side of the water guiding rib, reduce the downward impact force of the condensed water, and avoid the problem of large noise caused by the condensed water dripping to the condensate pan 7.

In other examples, the water guiding rib 232 may be a curved surface structure with an arc transition, or a straight rib structure that is inclined downward in a single direction.

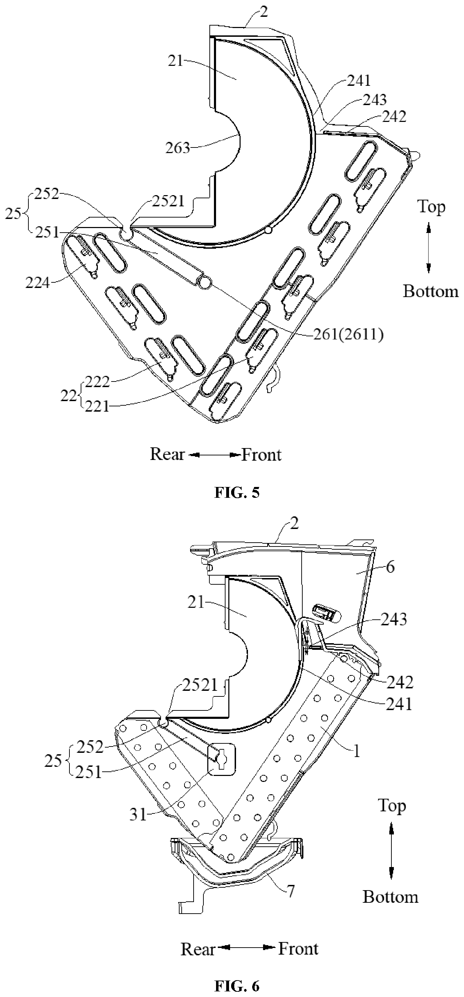

In some embodiments, as illustrated in FIGS. 5 and 6, the evaporator bracket 2 further includes a first protruding edge 241 and a second protruding edge 242, the first protruding edge 241 and the second protruding edge 242 are arranged on a side of the bracket body 21 facing the evaporator 1, the first protruding edge 241 is annular and configured for mating with an air impeller 8, the second protruding edge 242 is arranged adjacent to an upper end of the bracket body 21 and configured for mating with an air guiding frame 6, and the first protruding edge 241 and the second protruding edge 242 are spaced apart to form a drainage notch 243. The inventors of the present disclosure have found through experimental research that condensed water is easily accumulated at the upper position of the second protruding edge 242, and by spacing the first protruding edge 241 and the second protruding edge 242 apart, a drainage notch 243 may be formed so that the condensed water accumulated at the upper position of the second protruding edge 242 is discharged below the evaporator bracket 2, which is beneficial to improve the smoothness of drainage of the evaporator bracket 2, and avoids the problem of disorderly dripping of the condensed water.

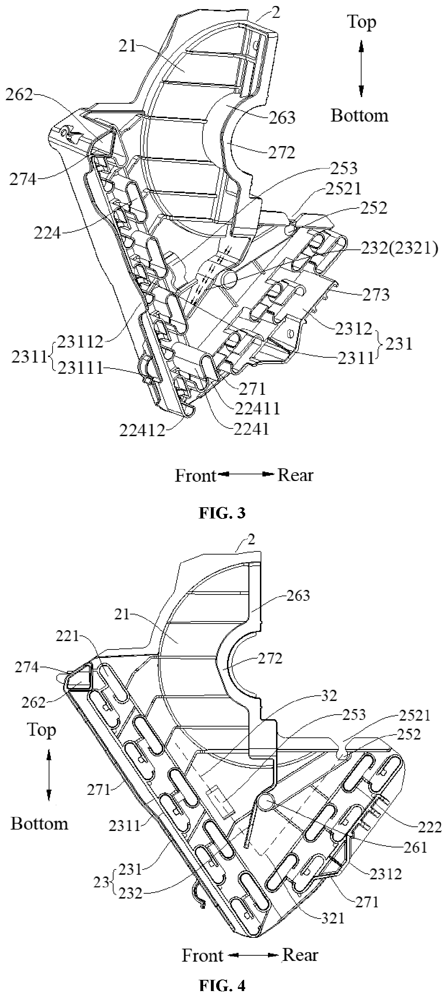

In some embodiments, as illustrated in FIGS. 4 to 6, the evaporator bracket 2 further includes a mounting portion 261, the mounting portion 261 is configured for mounting a heater 31, the wiring portion 25 includes a wiring trough 251, the wiring trough 251 and the mounting portion 261 are arranged on a side of the bracket body 21 adjacent to the evaporator 1, and at least a portion of a heating wire 32 of the heater 31 is arranged in the wiring trough 251, avoiding the problem that the heating wire 32 shakes relative to the evaporator bracket 2.

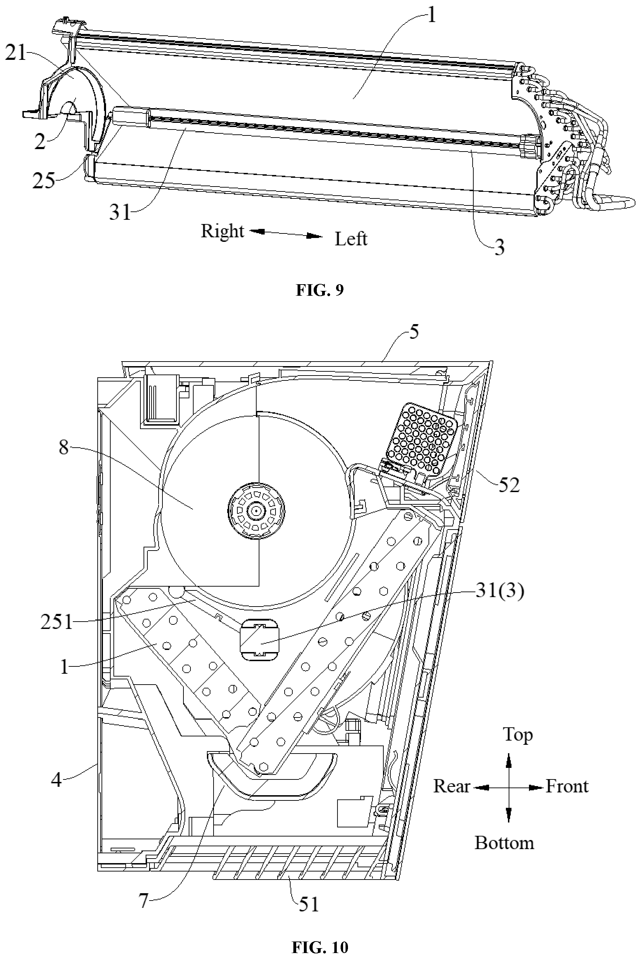

Specifically, as shown in FIGS. 4 and 9, the air conditioner indoor unit further includes a heating module 3, and the heating module 3 includes the heater 31 and a heating wire 32. The heater 31 and an electric control module (not illustrated) are respectively arranged on both sides in the thickness direction of the evaporator bracket 2, one end of the heating wire 32 is electrically connected to the heater 31 and arranged adjacent to the evaporator bracket 2, the other end of the heating wire 32 is electrically connected to the electric control module, and the heating wire 32 is fixed on the wiring portion 25.

Since one end of the heating wire 32 is electrically connected to the heater 31 and is arranged adjacent to the evaporator bracket 2, and the other end of the heating wire 32 is electrically connected to the electric control module, a wiring exit position of the heater 31 may be closer to the electric control module, reducing the arrangement length of the heating wire 32. Additionally, since the heating wire 32 is fixed on the wiring portion 25, the heating wire 32 may be fixed to avoid the problem that the heating wire 32 shakes relative to the evaporator bracket 2. Therefore, the evaporator bracket of embodiments of the present disclosure not only reduces the arrangement length of the heating wire 32, but also fixes the arrangement of the heating wire 32, which is beneficial to reduce electrical safety hazards and has low cost.

It may be understood that the wiring exit position of the heater 31 is arranged adjacent to the evaporator bracket 2, and the electric control module is arranged on the other side in the thickness direction of the evaporator bracket 2, thus the wiring exit position of the heater 31 may be made closer to the electric control module to reduce the arrangement length of the heating wire 32. The present disclosure may greatly reduce the arrangement length of the heating wire 32 as compared to a solution in which the heating wire 32 bypasses the evaporator 1 or the base 4.

For example, the heating wire 32 may pass over (bypass) or pass through the evaporator bracket 2 to connect with the electronic control module.

In some embodiments, as illustrated in FIGS. 4 to 6, the wiring portion 25 includes a wiring trough 251, the wiring trough 251 is arranged on a side of the bracket body 21 adjacent to the evaporator 1, and at least a portion of the heating wire 32 is arranged in the wiring trough 251. Thus, the heating wire 32 arranged on the evaporator bracket 2 may be concealed, the heating wire 32 may be avoided from interfering with other parts (for example, the air impeller 8), and the wiring space of the heating wire 32 may be reduced. It should be noted that an extension path of the wiring trough 251 may be designed according to an arrangement path of the heating wire 32, and the shape and length of the wiring trough 251 are not specifically limited in the present disclosure.

In order to further improve the reliability of fixing the heating wire 32, the wiring portion 25 further includes a snap-on clip (not illustrated) arranged at an opening position of the wiring trough 251, and the snap-on clip and the wiring trough 251 jointly define a snap channel, and the heating wire 32 is snap-fitted in the snap channel. Thus, it is possible to prevent the problem that the heating wire 32 is disengaged from the wiring trough 251, it is beneficial to improve the reliability of fixing the heating wire 32, and it is convenient to assemble and disassemble.

In other examples, the wiring portion 25 further includes a plurality of wire-clamping clips arranged sequentially along the extension path of the heating wire 32, and the plurality of wire-clamping clips are snap-fitted with the heating wire 32 to fix the heating wire 32 to the evaporator bracket 2.

In some embodiments, as illustrated in FIGS. 1 to 6, the wiring portion 25 further includes a wiring exit hole 252, the wiring exit hole 252 is arranged at an end of the wiring trough 251 facing away from the mounting portion 261, and the wiring exit hole 252 penetrates the bracket body 2 in a thickness direction of the evaporator bracket. It may be understood that the heating wire 32 passes through the evaporator bracket 2 through the wiring exit hole 252 to be connected with the electric control module, thus the arrangement length of the heating wire 32 may be further shortened, and the wiring exit hole 252 may restrict the wiring exit direction and the wiring exit position of the heating wire 32 to improve the mounting firmness of the heating wire 32.

In order to avoid the problem of air leakage or permeation of condensed water at the position of the wiring exit hole 252, an inner side surface of the wiring exit hole 252 may be abutted against the base 4, so that the base 4 blocks the inner side surface of the wiring exit hole 252 without affecting the normal communication between the wiring exit hole 252 and the wiring trough 251, that is, the heating wire 32 may normally pass through the wiring exit hole 252 from the wiring trough 251.

In an example, as illustrated in FIGS. 1 to 6, an upper end of the wiring exit hole 252 has a notch 2521, the notch 2521 is in communication with the wiring exit hole 252, and the notch 2521 is gradually flared from bottom to top. The heating wire 32 may be snapped into the wiring exit hole 252 from the position of the notch 2521, facilitating the assembly work of the heating wire 32. In addition, since the notch 2521 is gradually flared from bottom to top, it is possible to provide guidance for the snap-fit of the heating wire 32, and further improve the efficiency of assembling the heating wire 32.

In some embodiments, as illustrated in FIGS. 1 to 4, the wiring portion 25 further includes a wiring clip 253, the wiring clip 253 is arranged on a side of the bracket body 2 facing away from the evaporator 1, a wiring hole 2531 is formed in the wiring clip 253, and the wiring hole 2531 is passed through by the heating wire 2531. It may be understood that the heating wire 32 emerging from the wiring exit hole 252 is fixed by the wiring clip 253, and then the heating wire 32 is extended into the electronic control module to avoid the problem that the heating wire 32 shakes relative to the evaporator bracket 2.

Specifically, the wiring clip 253 and the wiring exit hole 252 are spaced apart along the front-rear direction of the evaporator bracket 2, and the heating wire 32 has a curved segment 33 arranged between the wiring exit hole 252 and the wiring clip 253, and the structure of the curved segment 33 is U-shaped and projects toward the lower end of the evaporator bracket 2. It may be understood that the curved segment 33 of the heating wire 32 may fit the outer wall surface of the evaporator bracket 2 under the constraint of the wiring exit hole 252 and the wiring clip 253, and the curved segment 33 of the heating wire 32 is U-shaped and projects toward the lower end of the evaporator bracket 2, thus the condensed water generated on the evaporator bracket 2 may be guided downward along the curved segment 33 to improve the flow guiding effect of the condensed water. On the other hand, since the heating wire 32 is configured as the above-described structure, it is possible to prevent condensed water from entering the electric control module along the extending direction of the heating wire 32, which is beneficial to reduce electrical safety hazards of the electric control module.

In an example, as illustrated in FIGS. 4 and 5, the mounting portion 261 is a protruding post, the protruding post projects away from the heater 31, one end of the protruding post facing the heater 31 has a receptacle 2611, the heater 31 has a plug, and the plug is installed in the receptacle 2611. It may be understood that the end (plug) of the heater 31 is plugged into a receptacle 2611 on the evaporator bracket 2 to facilitate installation and disassembly of the heater 31.

In some embodiments, as illustrated in FIGS. 1 to 4, and 7, the fixing portion 22 includes a plurality of fixing sleeves 224 spaced apart from each other, each fixing sleeve 224 projects toward a side of the bracket body 21 facing away from the evaporator 1, each fixing sleeve 224 is configured for fixing a metal tube 11 of the evaporator 1, the side of the evaporator bracket 2 facing away from the evaporator 1 has a plurality of support portions spaced apart from each other, the ends of the plurality of support portions are located in a same plane, the plurality of support portions include a first support portion 271, and at least one of the fixing sleeves 224 forms the first support portion 271.

According to the evaporator bracket 2 of embodiments of the present disclosure, the side of the evaporator bracket 2 facing away from the evaporator 1 has a plurality of support portions spaced apart from each other, and the ends of the plurality of support portions are located in the same plane, so that when the evaporator 1 is placed upright, the evaporator bracket 2 located at the end of the evaporator 1 may be supported by a plurality of support portions to ensure the stability of the evaporator 1 when it is upright, which is beneficial to the welding operation of an operator.

It may be understood that the ends of the plurality of support portions are located in the same plane, which may improve the stability of the evaporator bracket 2 in contact with the ground. For example, there may be two, three, or more support portions.

In addition, since at least one of the fixing sleeves 224 forms the first support portion 271, the fixing sleeves 224 may not only fix the metal tube 11 of the evaporator 1, but also provide auxiliary support for the evaporator 1 to stand upright, improving the degree of integration of the evaporator bracket 2 and saving the arrangement space on the evaporator bracket 2. It may be understood that the evaporator bracket 2 of embodiments of the present disclosure may not only utilize the structure of the evaporator bracket 2 itself, but also need not occupy too much space on the evaporator bracket 2, compared with the solution of separately arranging the support portion, reducing the blocking of the condensed water on the evaporator bracket 2, improving the flow guiding effect of the condensed water on the evaporator bracket 2, and improving the integration degree of the evaporator bracket 2.

For example, only one fixing sleeve 224 may form the first support portion 271. For another example, a plurality of fixing sleeves 224 may collectively form the first support portion 271.

In some embodiments, as illustrated in FIGS. 1 to 4, the plurality of support portions include a second support portion 272, the evaporator bracket 2 further includes a bearing seat 263, the bearing seat 263 is configured for supporting an end of the air impeller 8, and the bearing seat 263 projects toward the side of the bracket body 21 facing away from the evaporator 1 to form the second support portion 272. It could be understood that a bearing is mounted in the bearing seat 263, and an end of the air impeller 8 is rotationally supported in the bearing of the bearing seat 263. The bearing seat 263 serves to bear the air impeller 8 and to assist in supporting the evaporator 1 to stand upright. Thus, the structure of the bearing seat 263 of the evaporator bracket 2 may be utilized without occupying too much space on the evaporator bracket 2, which makes the structure of the evaporator bracket 2 simple in design and facilitates processing and manufacturing.

In some embodiments, as illustrated in FIGS. 1 to 4, and 7, the plurality of support portions include a third support portion 273, the evaporator bracket 2 further includes a water baffle plate 231, the water baffle plate 231 projects toward a side of the bracket body 21 facing away from the evaporator 1, the water baffle plate 231 is arranged on an outer edge of the bracket body 21 and gradually extends toward a lower end of the bracket body 21, and at least a portion of the water baffle plate 231 forms the third support portion 273. It may be understood that the water baffle plate 231 serves to guide the condensed water and to assist in supporting the evaporator 1 to stand upright. Thus, the structure of the water baffle plate 231 of the evaporator bracket 2 may be utilized without occupying too much space on the evaporator bracket 2, which makes the structure of the evaporator bracket 2 simple in design and facilitates processing and manufacturing.

As illustrated in FIGS. 1 to 4, the fixing portion 22 includes a first fixing portion 221 and a second fixing portion 222, the first fixing portion 221 and the second fixing portion 222 are arranged to form a V-shaped structure, an apex of the V-shape structure is oriented downward, and the first fixing portion 221 is arranged on a front side of the second fixing portion 222.The first fixing portion 221 and the second fixing portion 222 each include a plurality of fixing sleeves 224. It should be noted that a front-rear direction of the evaporator bracket 2 coincides with a front-rear direction of the air conditioner indoor unit.

The water baffle plate 231 includes a first water baffle plate 2311 and a second water baffle plate 2312, the first water baffle plate 2311 is arranged on the front side of the first fixing portion 221 and extends in the length direction of the first fixing portion 221, and the second water baffle plate 2312 is arranged on the rear side of the second fixing portion 222 and extends in the length direction of the second fixing portion 222.

Since the first fixing portion 221 and the second fixing portion 222 enclose a V-shaped structure with an apex oriented downward, the length direction of the first fixing portion 221 is gradually inclined downward from front to rear, and the first water baffle plate 2311 is also gradually inclined downward from front to rear. Since the first water baffle plate 2311 is arranged on the front side of the first fixing portion 221, the first water baffle plate 2311 may guide the condensed water dripping from the first fixing portion 221. The length direction of the second fixing portion 222 is gradually inclined downward from rear to front, and the second water baffle 2312 is also gradually inclined downward from rear to front. In other words, the first water baffle plate 2311 and the second water baffle plate 2312 collectively enclose the V-shaped structure. Since the second water baffle plate 2312 is arranged on the rear side of the second fixing portion 222, the second water baffle plate 2312 may guide the condensed water dripping from the second fixing portion 222.

In some embodiments, at least one of the first water baffle plate 2311 and the second water baffle plate 2312 forms the third support portion 273.

For example, only the first water baffle 2311 forms the third support portion 273. For another example, only the second water baffle plate 2312 forms the third support portion 273. For another example, the first water baffle plate 2311 and the second water baffle plate 2312 jointly form the third support portion 273.

It may be understood that the first water baffle plate 2311 and the second water baffle plate 2312 serve to guide condensed water and to assist in supporting the evaporator 1 to stand upright. Thus, the structure of the water baffle plate 231 of the evaporator bracket 2 may be utilized without occupying too much space on the evaporator bracket 2, which makes the structure of the evaporator bracket 2 simple in design and facilitates processing and manufacturing.

In some embodiments, as illustrated in FIGS. 1 to 4, the plurality of support portions include a fourth support portion 274, the evaporator bracket 2 further includes a boss 262, the boss 262 is arranged at a top of the bracket body 21 and arranged adjacent to a front side of the bracket body 21, the boss 262 projects toward a side of the bracket body 21 facing away from the evaporator 1 to form the fourth support portion 274. In the evaporator bracket 2 of embodiments of the present disclosure, by adding the fourth support portion 274, the support effect of the evaporator bracket 2 may be more stable than the support effect of the three-point support (the first support portion 271, the second support portion 272, and the third support portion 273).

Specifically, a plurality of fixing sleeves 224 are arranged sequentially along a V-shaped preset path , an apex of the V-shaped preset path is oriented downward, and the first support portion 271 is arranged adjacent to a lower end of the bracket body 21. Thus, the first support portion 271, the second support portion 272, the third support portion 273, and the fourth support portion 274 may be generally distributed at the four corners of the evaporator bracket 2, improving the stability of the evaporator bracket 2 supported on the ground, and further avoiding the problem of shaking of the tube welding of the evaporator bracket 2.

In an example of the present disclosure, as illustrated in FIGS. 1 to 4, the plurality of fixing sleeves 224 includes one first fixing sleeve 2241 and a plurality of second fixing sleeves 2242, a protruding size of the first fixing sleeve 2241 is larger than a protruding size of each of plurality of second fixing sleeves 2242, the first fixing sleeve 2241 is arranged adjacent to the lower end of the bracket body 21, and the first fixing sleeve 2241 forms the first support portion 271. It could be understood that only one fixing sleeve 224 (the first fixing sleeve 2241) of the plurality of fixing sleeves 224 forms the first support portion 271. Since the protruding size of the plurality of second fixing sleeves 2242 is smaller than the protruding size of the first fixing sleeve 2241, the space occupied by the evaporator bracket 2 in the length direction of the air conditioner indoor unit may be reduced, and the size in the length direction of the air conditioner indoor unit may be shortened.

In order to avoid the protruding structure of the first fixing sleeve 2241, the lower end of the first fixing sleeve 2241 has an avoidance notch 22411, and the avoidance notch 22411 is configured to avoid the condensate pan 7, avoiding interference between the first fixing sleeve 2241 and the condensate pan 7, and the arrangement length of the condensate pan 7 may be reduced.

As illustrated in FIG. 10, an air conditioner indoor unit according to other embodiments of the present disclosure includes an evaporator 1, an evaporator bracket 2, a frame 5, and a base 4. The end of the evaporator 1 has a metal tube 11, the evaporator bracket 2 is the evaporator bracket 2 of the present disclosure, the evaporator bracket 2 is arranged at the end of the evaporator 1, and the metal tube 11 passes through the fixing portion 22, the frame 5 and the base 4 enclose the mounting cavity, the evaporator 1 and the evaporator bracket 2 are arranged in the mounting cavity, and the frame 5 has an air inlet 51 and an air outlet 52.

According to the air conditioner indoor unit of other embodiments of the present disclosure, since the fixing portion 22 is configured to be passed through by the metal tube 11 of the evaporator 1, and the water guiding portion 23 and the fixing portion 22 are both arranged on the side of the bracket body 21 facing away from the evaporator 1, the condensed water accumulated at the position of the fixing portion 22 may be gradually guided toward the lower end of the bracket body 21 through the water guiding portion 23 to avoid the problem of water leakage in the air conditioner indoor unit caused by disorderly dripping of the condensed water. On the other hand, since the wiring portion 25 is arranged on the bracket body 21, and the wiring portion 25 is configured to fix the wire harness, the problem that the wire harness shakes relative to the evaporator bracket 2 may be avoided, and it is beneficial to reduce electrical safety hazards. Therefore, the evaporator bracket 2 of the air conditioner indoor unit according to embodiments of the present disclosure may fix the evaporator 1, have the functions of water guiding and wiring, and have the high degree of integration.

In some embodiments, as illustrated in FIGS. 1 and 10, the air conditioner indoor unit further includes a condensate pan 7, the condensate pan 7 is arranged in the mounting cavity and is located at the lower end of the evaporator bracket 2, and the first support portion 271 is arranged at the upper end of the condensate pan 7. It may be understood that the present disclosure may reduce the arrangement length of the condensate pan 7 compared with the solution in which the first support portion 271 is arranged inside the condensate pan 7.

Specifically, as illustrated in FIGS. 1 to 4, the first fixing sleeve 2241 forms the first support portion 271, the first fixing sleeve 2241 is arranged adjacent to the lower end of the bracket body 21 and located at the upper end of the condensate pan 7, the lower end of the first fixing sleeve 2241 has an avoidance notch 22411, and the avoidance notch 22411 is configured to avoid the condensate pan 7 to avoid interference between the first fixing sleeve 2241 and the condensate pan 7. However, one or more second fixing sleeves 2242 may be arranged in the condensate pan 7, which is not limited in the present disclosure.

As illustrated in FIG. 1, both the fixing portion 22 and the water guiding portion 23 are arranged to extend downward in the direction of the condensate pan 7. Thus, the condensed water collected on the first water baffle plate 2311, the second water baffle plate 2312, the water guiding rib 232, and the bracket body 21 may all be guided into the condensate pan 7 to avoid the problem that the condensed water drips outside the air conditioner indoor unit.

As illustrated in FIGS. 1 to 4, the water baffle plate 231 (first water baffle plate 2311) includes a first rib segment 23111 and a second rib segment 23112 connected to each other, the first rib segment 23111 is arranged at a lower end of the second rib segment 23112, a size of the first rib segment 23111 protruding from the fixing portion 22 is smaller than a size of the second rib segment 23112 protruding from the fixing portion 22, and at least a portion of the first rib segment 23111 extends into the condensate pan 7. It may be understood that the protruding size of the first rib segment 23111 is smaller than the protruding size of the second rib segment 23112, so that interference between the first water baffle plate 2311 and the condensate pan 7 may be avoided when the evaporator bracket 2 and the condensate pan 7 are assembled.

On the other hand, since the protruding size of the second rib segment 23112 is smaller, the assembly work of the condensate pan 7 and the evaporator bracket 2 may be completed without increasing the length of the condensate pan 7, which is beneficial to reduce the size of the air conditioner in the length direction.

In some embodiments, the end of the metal tube 11 is arranged in the fixing portion 22, and the distance between the end of the water baffle plate 231 and the end of the metal tube 11 in the thickness direction of the bracket body 21 is denoted as A, where 5 mm ≤ A ≤ 10 mm. For example, the value of A may be 5 mm, 7 mm, 8 mm, or 10 mm. The inventors of the present disclosure have found through experimental studies that when the distance between the end of the water baffle plate 231 and the end of the metal tube 11 adopts the above numerical range, the protruding size of the water baffle plate 231 may be reduced on the basis of ensuring that all the condensed water dripping on the metal tube 11 is guided, and thus the structure of the air conditioner indoor unit may be made more compact.

In some embodiments, as illustrated in FIG. 10, the air inlet 51 is arranged on a lower end surface of the frame 5, the evaporator 1 projects toward the air inlet 51, and the front wall surface of the frame 5 is opened to form the air outlet 52. Since the air inlet 51 is arranged on the lower end surface of the frame 5, and the front wall surface of the frame 5 is opened to form the air outlet 52, the air conditioner indoor unit according to embodiments of the present disclosure may be installed flush against the ceiling. It could be understood that the ambient air does not need to enter an interior of the air conditioner indoor unit from directly above the frame 5. Thus, a distance between the air conditioner indoor unit and a top wall (the ceiling) of a room may be greatly reduced or removed, the space utilization of the room, in particular for the room with low height, may be improved, and sense of constriction of the room space may be effectively reduced or removed. The air conditioner indoor unit according to embodiments of the present disclosure has very low requirements for installation space, and as long as the installation space may accommodate the air conditioner indoor unit, there is no need to leave air inlet space or air outlet space above the air conditioner indoor unit, which may expand the applicability of the air conditioner indoor unit.

For example, in a projection plane orthogonal to the length direction of the base 4, the cross section of the evaporator 1 is V-shaped, and the apex of the evaporator 1 is oriented toward the air inlet 51. It may be understood that the airflow entering the air conditioner indoor unit from the air inlet 51 in the lower portion of the frame 5 may exchange heat with the V-shaped wall surface of the evaporator 1, and the airflow after the heat exchange may be discharged through the air outlet 52, improving the heat exchange effect of the air conditioner indoor unit.

An air conditioner according to other embodiments of the present disclosure includes an air conditioner outdoor unit and an air conditioner indoor unit, the air conditioner indoor unit is the air conditioner indoor unit of the present disclosure, and the air conditioner indoor unit is connected to the air conditioner outdoor unit. The technical advantages of the air conditioner of the embodiments of the present disclosure are the same as those of the evaporator bracket 2 and the air conditioner indoor unit of the above-described embodiments, which is not repeated here.

In the specification, it is to be understood that terms such as "central," "longitudinal," "lateral," "length," "width," "thickness," "upper," "lower," "front," "rear," "left," "right," "vertical," "horizontal," "top," "bottom," "inner," "outer," "clockwise," "counterclockwise," "axial," "radial" and "circumferential" should be construed to refer to the orientation as then described or as illustrated in the drawings under discussion. These relative terms are for convenience of description and do not require that the present disclosure be constructed or operated in a particular orientation.

In addition, terms such as "first" and "second" are used herein for purposes of description and are not intended to indicate or imply relative importance or significance. Thus, the feature defined with "first" and "second" may comprise one or more of this feature. In the description of the present disclosure, "a plurality of" means two or more than two, unless specified otherwise.

In the present disclosure, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements, unless limited otherwise. The specific meanings of the above terms in the present disclosure may be understood by those skilled in the art according to specific situations.

In the present disclosure, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on," "above," or "on top of" a second feature may include an embodiment in which the first feature is right or obliquely "on," "above," or "on top of" the second feature, or just means that the first feature is at a height higher than that of the second feature. While a first feature "below," "under," or "on bottom of" a second feature may include an embodiment in which the first feature is right or obliquely "below," "under," or "on bottom of" the second feature, or just means that the first feature is at a height lower than that of the second feature.

In the present disclosure, reference to "an embodiment," "some embodiments," "an example," "a specific example," or "some examples," means that a particular feature, structure, material, or characteristic described in connection with the embodiment or example is included in at least one embodiment or example of the present disclosure. In the present specification, the appearances of the phrases in various places throughout this specification are not necessarily referring to the same embodiment or example of the present disclosure. Furthermore, the particular features, structures, materials, or characteristics may be combined in any suitable manner in one or more embodiments or examples. In addition, without conflicting, various embodiments or examples or features of various embodiments or examples described in the present specification may be combined by those skilled in the art.

Although the embodiments have been shown and described, it would be appreciated by those skilled in the art that the above embodiments cannot be construed to limit the present disclosure, and changes, modifications, alternatives, and variations made in the embodiments of the present disclosure all fall within the scope of the present disclosure.

All embodiments of the present disclosure may be implemented alone or in combination with other embodiments, and are regarded as the scope of protection claims of the present disclosure.

## Claims

1. An evaporator bracket (2), comprising a bracket body (21), a fixing portion (22), a water guiding portion (23), and a wiring portion (25), wherein the fixing portion (22) is arranged on the bracket body (21) and is configured to be passed through by a metal tube (11) of an evaporator (1), the water guiding portion (23) and the fixing portion (22) are arranged on a side of the bracket body (21) facing away from the evaporator (1), the water guiding portion (23) extends toward a lower end of the bracket body (21), and the wiring portion (25) is arranged on the bracket body (21) and is configured for fixing a wiring harness.

2. The evaporator bracket according to claim 1, wherein the water guiding portion (23) comprises a water baffle plate (231), the water baffle plate (231) projects toward a side of the bracket body (21) facing away from the evaporator (1), the water baffle plate (231) is arranged on an outer edge of the bracket body (21) and gradually extends toward a lower end of the bracket body (21), and a size of the water baffle plate (231) protruding from the bracket body (21) is larger than a size of the fixing portion (22) protruding from the bracket body (21).

3. The evaporator bracket according to claim 2, wherein the fixing portion (22) comprises a first fixing portion (221) and a second fixing portion (222), the first fixing portion (221) and the second fixing portion (222) are arranged to form a V-shaped structure, an apex of the V-shape structure is oriented downward, the first fixing portion (221) is arranged on a front side of the second fixing portion (222), the water baffle plate (231) comprises a first water baffle plate (2311), and the first water baffle plate (2311) is arranged on a front side of the first fixing portion (221) and extends along a length direction of the first fixing portion (221).

4. The evaporator bracket according to claim 3, wherein the water baffle plate (231) further comprises a second water baffle plate (2312), the second water baffle plate (2312) is arranged on a rear side of the second fixing portion (222) and extends along a length direction of the second fixing portion (222).

5. The evaporator bracket according to claim 3 or 4, wherein at least one of the first fixing portion (221) and the second fixing portion (222) comprises a water retaining edge (223) and a plurality of fixing sleeves (224), the plurality of fixing sleeves (224) are sequentially arranged from top to bottom, the metal tubes (11) pass through the plurality of fixing sleeves (224) in a one-to-one correspondence, the water retaining edge (223) projects toward a side of the bracket body (21) facing away from the evaporator (1), and the water retaining edge (223) is sequentially connected to the plurality of fixing sleeves (224) from top to bottom.

6. The evaporator bracket according to any one of claims 1 to 5, wherein the water guiding portion (23) comprises a water guiding rib (232), the water guiding rib (232) projects toward a side of the bracket body (21) facing away from the evaporator (1), and the water guiding rib (232) is inclined in a front-rear direction of the bracket body (21) and extends downward.

7. The evaporator bracket according to claim 6, wherein the water guiding rib (232) comprises a plurality of bent segments (2321), an angle is present between two adjacent bent segments (2321), and the plurality of bent segments (2321) are sequentially connected from top to bottom.

8. The evaporator bracket according to any one of claims 1 to 7, wherein the evaporator bracket further comprises a first protruding edge (241) and a second protruding edge (242), the first protruding edge (241) and the second protruding edge (242) are arranged on a side of the bracket body (21) facing the evaporator (1), the first protruding edge (241) is annular and configured for mating with an air impeller (8), the second protruding edge (242) is arranged adjacent to an upper end of the bracket body (21) and configured for mating with an air guiding frame (6), and the first protruding edge (241) and the second protruding edge (242) are spaced apart to form a drainage notch (243).

9. The evaporator bracket according to any one of claims 1 to 8, wherein the evaporator bracket further comprises a mounting portion (261), the mounting portion (261) is configured for mounting a heater (31), the wiring portion (25) comprises a wiring trough (251), the wiring trough (251) and the mounting portion (261) are arranged on a side of the bracket body (21) adjacent to the evaporator (1), and at least a portion of a heating wire (32) of the heater (31) is arranged in the wiring trough (251).

10. The evaporator bracket according to claim 9, wherein the wiring portion (25) further comprises a snap-on clip, the snap-on clip is arranged at an opening position of the wiring trough (251), and the snap-on clip and the wiring trough (251) together define a snap channel for fixing the heating wire (32).

11. The evaporator bracket according to claim 9 or 10, wherein the wiring portion (25) further comprises a wiring exit hole (252), the wiring exit hole (252) is arranged at an end of the wiring trough (251) facing away from the mounting portion (261), and the wiring exit hole (252) penetrates the bracket body (21) in a thickness direction of the evaporator bracket.

12. The evaporator bracket according to claim 11, wherein an upper end of the wiring exit hole (252) has a notch (2521), the notch (2521) is in communication with the wiring exit hole (252), and the notch (2521) is gradually flared from bottom to top; and/or
the wiring portion (25) further comprises a wiring clip (253), the wiring clip (253) is arranged on the side of the bracket body (21) facing away from the evaporator (1), a wiring hole (2531) is formed in the wiring clip (253), and the wiring hole (2531) is configured to be passed through by heating wire (32).

13. The evaporator bracket according to any one of claims 1 to 12, wherein the fixing portion (22) comprises a plurality of fixing sleeves (224) spaced apart from each other, each fixing sleeve (224) projects toward a side of the bracket body (21) facing away from the evaporator (1), each fixing sleeve (224) is configured for fixing the metal tube (11) of the evaporator (1), the side of the evaporator bracket facing away from the evaporator (1) is provided with a plurality of support portions spaced apart from each other, ends of the plurality of support portions are located in a same plane, the plurality of support portions comprise a first support portion (271), and at least one of the plurality of fixing sleeves (224) forms the first support portion (271).

14. The evaporator bracket according to claim 13, wherein the plurality of support portions comprise a second support portion (272), the evaporator bracket further comprises a bearing seat (263), the bearing seat (263) is configured for supporting an end of the air impeller (8), and the bearing seat (263) projects toward the side of the bracket body (21) facing away from the evaporator (1) to form the second support portion (272).

15. The evaporator bracket according to claim 13 or 14, wherein the plurality of support portions comprise a third support portion (273), the water guiding portion (23) comprises a water baffle plate (231), the water baffle plate (231) projects toward a side of the bracket body (21) facing away from the evaporator (1), the water baffle plate (231) is arranged on an outer edge of the bracket body (21) and gradually extends toward a lower end of the bracket body (21), and at least a portion of the water baffle plate (231) forms the third support portion (273).

16. The evaporator bracket according to any one of claims 13 to 15, wherein the plurality of support portions comprise a fourth support portion (274), the evaporator bracket further comprises a boss (262), the boss (262) is arranged at a top of the bracket body (21) and arranged adjacent to a front side of the bracket body (21), and the boss (262) projects toward a side of the bracket body (21) facing away from the evaporator (1) to form the fourth support portion (274).

17. The evaporator bracket according to any one of claims 13 to 16, wherein the plurality of fixing sleeves (224) are arranged sequentially along a V-shape preset path, an apex of the V-shaped preset path is oriented downward, and the first support portion (271) is arranged adjacent to a lower end of the bracket body (21).

18. The evaporator bracket according to any one of claims 13 to 17, wherein the plurality of fixing sleeves (224) comprises one first fixing sleeve (2241) and a plurality of second fixing sleeves (2242), a protruding size of the first fixing sleeve (2241) is larger than a protruding size of each of the plurality of second fixing sleeves (2242), the first fixing sleeve (2241) is arranged adjacent to the lower end of the bracket body (21), and the first fixing sleeve (2241) forms the first support portion (271).

19. The evaporator bracket according to claim 18, wherein a lower end of the first fixing sleeve (2241) has an avoidance notch (22411), and the avoidance notch (22411) is configured to avoid a condensate pan (7).

20. An air conditioner indoor unit, comprising:
an evaporator (1), an end of the evaporator (1) having a metal tube (11);
the evaporator bracket according to any one of claims 1 to 19, the evaporator bracket being arranged at the end of the evaporator (1), and the metal tube (11) passing through the fixing portion (22); and
a frame (5) and a base (4), wherein the frame (5) and the base (4) enclose an mounting cavity, the evaporator (1) and the evaporator bracket are arranged in the mounting cavity, and the frame (5) has an air inlet (51) and an air outlet (52).
